# EUROPÄISCHE PATENTSCHRIFT

(11) **EP 3 747 118 B1**
(45) Veröffentlichungstag und Bekanntmachung des Hinweises auf die Patenterteilung: **09.03.2022**
(21) Anmeldenummer: 19700690.1
(22) Anmeldetag: 14.01.2019
(51) Int. Cl.: H02M 3/335, H02M 1/32, H02M 1/00

(54) **SYNCHRONKONVERTER MIT ÜBER- UND UNTERSTROMSCHUTZ**
SYNCHRONOUS CONVERTER HAVING UNDER- AND OVERCURRENT PROTECTION
CONVERTISSEUR SYNCHRONE COMPRENANT UNE PROTECTION CONTRE LES SURINTENSITÉS ET CONTRE LES COURANTS FAIBLES

(30) Priorität: 07.02.2018 DE 102018201878
(43) Veröffentlichungstag der Anmeldung: 09.12.2020
(73) Patentinhaber: Tridonic GmbH & Co. KG, 6851 Dornbirn (AT)
(72) Erfinder: DE CLERCQ, Ludwig Erasmus, 6850 Dornbirn (AT)
(74) Vertreter: Rupp, Christian
(86) Internationale Anmeldenummer: PCT/EP2019/050762
(87) Internationale Veröffentlichungsnummer: WO 2019/154590

(56) Entgegenhaltungen:
- EP-A2- 1 835 605
- WO-A1-2015/121011
- WO-A2-2010/065598
- DE-A1-102014 202 665
- US-A1- 2007 216 396
- US-A1- 2017 358 990

## Beschreibung

### GEBIET DER ERFINDUNG

Die vorliegende Erfindung betrifft Synchronkonverter und Verfahren zum Stromschutz von Synchronkonvertern, sowie diesbezügliche Betriebsgeräte und Beleuchtungseinrichtungen. Insbesondere betrifft die vorliegende Erfindung Synchronkonverter mit im allgemeinen Fall verschiedenen Grenzstromstärken auf einer Versorgungsseite und einer Lastseite.

### HINTERGRUND DER ERFINDUNG

Betriebsgeräte zum Betreiben von LED-Modulen bedienen sich bekannter Konverterarchitekturen, um eine für die zu betreibenden LED-Module angepasste Lastspannung aus einer vorgegebenen Eingangsspannung, beispielsweise einer Bus-Gleichspannung oder einer Netz-Wechselspannung, bereitzustellen, welche sich nicht direkt zum Betreiben von LED-Modulen eignet.

Synchronkonverter bewerkstelligen dies mittels zweier Schaltmittel, etwa Transistoren, welche einen Leistungsfluss durch einen Energiespeicher, etwa einen magnetischen Energiespeicher, steuern. Isolierende Konverter verfügen über einen magnetischen Energiespeicher, insbesondere Übertrager, welcher eine Versorgungsseite und eine Lastseite des Konverters magnetisch koppelt.

Ein Schutz gegen Über- und Unterströme auf beiden Seiten eines isolierenden Synchronkonverters erfordert eine Erfassung der Stromstärken auf beiden Seiten. Eine Auswertung der erfassten Stromstärken erfolgt aus Kostengründen jedoch auf nur einer der beiden Seiten, sodass für eine Übertragung der erfassten Stromstärke von der anderen Seite der beiden Seiten über eine Isolationsbarriere zwischen den beiden Seiten ein Zusatzaufwand in Bezug auf Schaltungskomplexität, Bauteilzahl und Leiterplattenfläche zu Buche schlägt.

In US 2007/216396 A1 wird ein Konverter/Wandler mit einem Schalter offenbart, bei dem eine Schätzung eines sekundärseitigen Laststroms auf Grundlage eines Primärstroms sowie weiterer Größen erfolgt.

### ZUSAMMENFASSUNG DER ERFINDUNG

Es besteht daher ein Bedarf an Synchronkonvertern und Verfahren zum Stromschutz von Synchronkonvertern sowie darauf aufbauenden Vorrichtungen, welche einige oder mehrere dieser nachteiligen Aspekte vermeiden.

Diese Aufgabe wird erfindungsgemäß durch einen Synchronkonverter gemäß Patentanspruch 1 und durch ein Verfahren zum Stromschutz eines Synchronkonverters gemäß Patentanspruch 12 gelöst. Die abhängigen Ansprüche definieren bevorzugte und vorteilhafte Ausführungsformen der Erfindung.

Gemäß einem ersten Aspekt umfasst ein Synchronkonverter, als ein synchroner Sperrwandler ausgebildet, einen Übertrager mit vorgegebenem Windungsverhältnis, welcher eine Versorgungsseite und eine Lastseite des Synchronkonverters koppelt, welchen jeweilige Grenzstromstärken zugewiesen sind; ein erstes Schaltmittel mit einem ersten pulsweitenmodulierten Ansteuersignal, wobei das ersteAnsteuersignal in einer ersten Zeitspanne eines periodischen Betriebszyklus des Synchronkonverters aktiviert ist, um das erste Schaltmittel zu schließen und in dieser Zeitspanne einen Fluss einer Stromstärke auf einer Seite aus der Versorgungsseite und der Lastseite zu ermögliche,auf der Lastseite eine Filterkapazität und ein zweites Schaltmittel mit einem zweiten pulsweitenmodulierten Ansteuersignal, wobei das zweite Ansteuersignal in einer zweiten Zeitspanne des periodischen Betriebszyklus des Synchronkonverters aktiviert ist, um das betreffende Schaltmittel in dieser Zeitspanne zu schließen und einen Fluss einer Stromstärke auf einer anderen Seite aus der Versorgungsseite und der Lastseite zu ermöglichen, Erfassungsmittel, welche dazu eingerichtet sind, eine Stromstärke auf einer Seite aus der Versorgungsseite und der Lastseite zu erfassen; Umsetzungsmittel, welche dazu eingerichtet sind, die Grenzstromstärken der anderen Seite aus der Versorgungsseite und der Lastseite über das vorgegebene Windungsverhältnis umgesetzt als entsprechende Grenzstromstärken auf der einen Seite bereitzustellen, und Vergleichsmittel, welche dazu eingerichtet sind, die erfasste Stromstärke mit den Grenzstromstärken der eine Seite und mit den entsprechenden Grenzstromstärken auf der einen Seite zu vergleichen.

Vorteilhaft kann mit einer Umsetzung von zum Fertigungszeitpunkt feststehenden Grenzstromstärken der anderen Seite in entsprechende, im Wirkbetrieb bereitstehende Grenzstromstärken auf der einen Seite eine lediglich einseitige Erfassung und Prüfung der Stromstärken auf beiden Seiten des Synchronkonverters stattfinden. Eine weitere Erfassung einer Stromstärke auf der anderen Seite und deren Übertragung auf die eine (Erfassungs-)Seite ist nicht erforderlich. Dies reduziert einen Schaltungsaufwand, erfordert weniger Bauteile und spart Leiterplattenfläche.

Unter einem Synchronkonverter im Sinne dieser Anmeldung kann eine elektronische Schaltung und/oder Baugruppe verstanden werden, welche dazu eingerichtet ist, eine elektrische Leistung mittels eines Energiespeichers und zweier Schaltmittel umzuspannen, welche abwechselnd angesteuert einen Leistungsfluss durch den Energiespeicher steuern.

Unter einer Versorgungsseite im Sinne dieser Anmeldung kann ein Schaltungsabschnitt des Synchronkonverters verstanden werden, welcher elektrisch leitend an eine elektrische Energiequelle, insbesondere an eine Spannungsquelle, anschließbar ist.

Unter einer Lastseite im Sinne dieser Anmeldung kann ein Schaltungsabschnitt des Synchronkonverters verstanden werden, welcher elektrisch leitend an eine Last, insbesondere an die zumindest eine LED, anschließbar ist.

Unter einer Grenzstromstärke im Sinne dieser Anmeldung kann eine Stromstärke verstanden werden, bis zu welcher die jeweils auf der Versorgungsseite oder der Lastseite des Synchronkonverters vorgesehenen Schaltungselemente gemäß Herstellervorgaben betreibbar sind. Im Allgemeinen sind auf der Versorgungsseite und auf der Lastseite verschiedene Schaltungselemente mit unterschiedlichen Herstellervorgaben einsetzbar, so dass der Versorgungsseite und der Lastseite im Allgemeinen verschiedene Grenzstromstärken zuzuordnen sind. Beispielsweise sind auf der Versorgungsseite und auf der Lastseite verschiedene Schaltmittel einsetzbar.

Umsetzungsmittel können beispielsweise Funktionseinheiten integrierter Schaltungen sein, welche dazu eingerichtet sind, digitale Größen zu multiplizieren und zu dividieren.

Vergleichsmittel können beispielsweise Funktionseinheiten integrierter Schaltungen sein, welche dazu eingerichtet sind, digitale Größen zu vergleichen.

Die Umsetzungsmittel können eine Abruftabelle umfassen mit den jeweiligen Grenzstromstärken der einen und der anderen Seite des Synchronkonverters. Dabei können die Umsetzungsmittel dazu eingerichtet sein, die Grenzstromstärken der anderen Seite aus der Abruftabelle abzurufen und über das vorgegebene Windungsverhältnis umgesetzt als die entsprechenden Grenzstromstärken auf der einen Seite bereitzustellen.

Vorteilhaft sind derart vorliegende Grenzstromstärken der einen und der anderen Seite im Wirkbetrieb modifizierbar, beispielsweise in Abhängigkeit von einer bereitgestellten Bus-Gleichspannung, sodass ein Betrieb des Synchronkonverters auf die jeweiligen Betriebsumstände flexibel anpassbar ist.

Unter einer Abruftabelle im Sinne dieser Anmeldung kann eine Tabelle mit vorgegebenen Werten verstanden werden, aus welcher ein jeweiliges Abrufergebnis in Abhängigkeit eines oder mehrerer Vorgabewerte, insbesondere Indizes, abrufbar ist.

Alternativ können die Umsetzungsmittel eine Abruftabelle umfassen mit den Grenzstromstärken der einen Seite und den über das vorgegebene Windungsverhältnis umgesetzten, entsprechenden Grenzstromstärken auf der einen Seite des Synchronkonverters. Dabei können die Umsetzungsmittel dazu eingerichtet sein, die entsprechenden Grenzstromstärken auf der einen Seite aus der Abruftabelle abzurufen und diese bereitzustellen.

Vorteilhaft sind derart vorliegende Grenzstromstärken der einen und der anderen Seite bereits insofern für den Wirkbetrieb vorbereitet, als dass sie einen ggf. oftmals wiederkehrenden Berechnungsaufwand, insbesondere Multiplikationen und Divisionen mit Windungszahlen, im Wirkbetrieb vermeiden. Dies kann insbesondere Konverterarchitekturen stark entlasten, welche über keine Fließkomma-Recheneinheit verfügen.

Als weitere Alternative können die Umsetzungsmittel eine Abruftabelle umfassen mit einer betragsmäßig kleineren aus einer positiven Grenzstromstärke der einen Seite und einer über das vorgegebene Windungsverhältnis umgesetzten, entsprechenden positiven Grenzstromstärke auf der einen Seite des Synchronkonverters, und mit einer betragsmäßig kleineren aus einer negativen Grenzstromstärke der einen Seite und einer über das vorgegebene Windungsverhältnis umgesetzten, entsprechenden negativen Grenzstromstärke auf der einen Seite des Synchronkonverters. Dabei können die Umsetzungsmittel dazu eingerichtet sein, die betragsmäßig kleineren Grenzstromstärken aus der Abruftabelle abzurufen und diese als entsprechende Grenzstromstärken auf der einen Seite bereitzustellen.

Vorteilhaft sind derart vorliegende Grenzstromstärken der einen und der anderen Seite bereits insofern für den Wirkbetrieb optimiert, als dass sie einen ggf. oftmals wiederkehrenden Berechnungsaufwand, insbesondere Multiplikationen und Divisionen mit Windungszahlen sowie zudem separate Vergleiche für die beiden Seiten des Synchronkonverters im Wirkbetrieb vermeiden.

Die Umsetzungsmittel können eine Funktionseinheit eines Mikrocontrollers oder einer anwendungsspezifischen integrierten Schaltung, ASIC, umfassen.

Vorteilhaft für eine Kostenstruktur ist bei Kleinserienfertigung ein Mikrocontroller, und bei Großserienfertigung ein ASIC.

Unter einem Mikrocontroller im Sinne dieser Anmeldung kann eine programmierbare integrierte Schaltung verstanden werden, welche neben einer Prozessorfunktion auch Peripheriefunktionen umfassen kann.

Unter einer anwendungsspezifischen integrierten Schaltung im Sinne dieser Anmeldung kann eine nicht programmierbare integrierte Schaltung verstanden werden, deren Funktion durch Ihre Herstellung definiert wird.

Die Vergleichsmittel können eine Funktionseinheit eines Mikrocontrollers oder einer anwendungsspezifischen integrierten Schaltung umfassen.

Vorteilhaft lassen sich in den normalen arithmetischen Einheiten der jeweiligen integrierten Schaltung die im Wirkbetrieb in digitaler Form bereitstehenden Grenzstromstärken verarbeiten, ohne weitere Anpassungen zu erfordern.

Die Erfassungsmittel können auf der einen Seite des Synchronkonverters angeordnet sein.

Vorteilhaft reduziert dies einen Schaltungsaufwand, erfordert weniger Bauteile und spart Leiterplattenfläche insbesondere dann, wenn auf der einen Seite des Synchronkonverters auch bereits die jeweilige integrierte Schaltung angeordnet ist.

Die Erfassungsmittel können einen Messwiderstand umfassen.

Vorteilhaft ist ein Messwiderstand ein sehr kostengünstiges analoges Schaltungselement. In Kombination mit einer Funktionseinheit der jeweiligen integrierten Schaltung zur Analog-Digital-Umsetzung sind diese Erfassungsmittel hinreichend zum Erfassen der Stromstärke auf der einen Seite.

Der Synchronkonverter kann als ein synchroner Sperrwandler ausgebildet sein, welcher den Übertrager umfasst.

Vorteilhaft kombiniert eine solche Konverterarchitektur die vorteilhaften Eigenschaften von äußerst effizienten Synchronkonvertern und von sicheren isolierenden Konvertern.

Gemäß einem zweiten Aspekt umfasst ein Betriebsgerät zum Betreiben zumindest einer LED einen Synchronkonverter gemäß Ausführungsbeispielen.

Vorteilhaft sind die oben genannten Vorrichtungsmerkmale des Synchronkonverters mit ihren jeweiligen Vorteilen in dem Betriebsgerät analog nutzbar.

Unter einem Betriebsgerät im Sinne dieser Anmeldung kann eine elektronische Schaltung und/oder Baugruppe verstanden werden, welche dazu eingerichtet ist, die zumindest eine LED aus einer elektrischen Energiequelle zu speisen, welche per se nicht dazu eingerichtet ist.

Gemäß einem dritten Aspekt umfasst eine Beleuchtungseinrichtung ein Betriebsgerät gemäß Ausführungsbeispielen; und zumindest eine LED.

Vorteilhaft sind die oben genannten Vorrichtungsmerkmale des Synchronkonverters bzw. des Betriebsgeräts mit ihren jeweiligen Vorteilen in der Beleuchtungseinrichtung analog nutzbar.

Gemäß einem vierten Aspekt umfasst ein Verfahren zum Stromschutz eines Synchronkonverters mit einem Übertrager mit vorgegebenem Windungsverhältnis, welcher eine Versorgungsseite und eine Lastseite des Synchronkonverters koppelt, welchen jeweilige Grenzstromstärken zugewiesen sind: ein Erfassen einer Stromstärke auf einer Seite aus der Versorgungsseite und der Lastseite; ein Umsetzen der Grenzstromstärken der anderen Seite aus der Versorgungsseite und der Lastseite über das vorgegebene Windungsverhältnis; ein Bereitstellen der umgesetzten Grenzstromstärken der anderen Seite als entsprechende Grenzstromstärken auf der einen Seite, und ein Vergleichen der erfassten Stromstärke mit den Grenzstromstärken der einen Seite und mit den entsprechenden Grenzstromstärken auf der einen Seite.

Das Verfahren kann mit einem Synchronkonverter gemäß Ausführungsbeispielen durchgeführt werden.

Vorteilhaft sind die oben genannten Vorrichtungsmerkmale des Synchronkonverters mit ihren jeweiligen Vorteilen in dem Verfahren analog nutzbar.

Das Verfahren kann zum Überstromschutz oder zum Unterstromschutz des Synchronkonverters durchgeführt werden.

Vorteilhaft ist so ein Schutz gegen Überströme in jegliche Leiterrichtung realisierbar.

### KURZE BESCHREIBUNG DER FIGUREN

Die Erfindung wird nachfolgend anhand bevorzugter Ausführungsformen und unter Bezugnahme auf die Zeichnungen kurz erläutert, wobei gleiche Bezugszeichen gleiche oder ähnliche Elemente bezeichnen.
Fig. 1 zeigt schematisch einen Synchronkonverter nach einem Ausführungsbeispiel.
Fig. 2 zeigt schematisch einen zeitlichen Verlauf ausgewählter elektrischer Größen des Synchronkonverters nach dem Ausführungsbeispiel.
Fig. 3A-3C zeigen schematisch verschiedene Abruftabellen zur weiteren Ausbildung der Umsetzungsmittel des Synchronkonverters nach dem Ausführungsbeispiel.
Fig. 4 zeigt schematisch ein Betriebsgerät mit dem Synchronkonverter nach dem Ausführungsbeispiel und eine Beleuchtungseinrichtung mit dem Betriebsgerät.
Fig. 5 zeigt schematisch ein Verfahren zum Stromschutz des Synchronkonverters nach dem Ausführungsbeispiel.

### DETAILLIERTE BESCHREIBUNG VON AUSFÜHRUNGSBEISPIELEN

Die Erfindung wird nachfolgend anhand bevorzugter Ausführungsformen und unter Bezugnahme auf die Zeichnungen näher erläutert. Eine Beschreibung von Ausführungsbeispielen in spezifischen Anwendungsfeldern bedeutet keine Einschränkung auf diese Anwendungsfelder. Elemente schematischer Darstellungen sind nicht notwendigerweise maßstabsgetreu wiedergegeben, sondern vielmehr derart, dass ihre Funktion und ihr Zweck dem Fachmann verständlich werden. Soweit nicht ausdrücklich anders angegeben sind die Merkmale der verschiedenen Ausführungsformen miteinander kombinierbar.

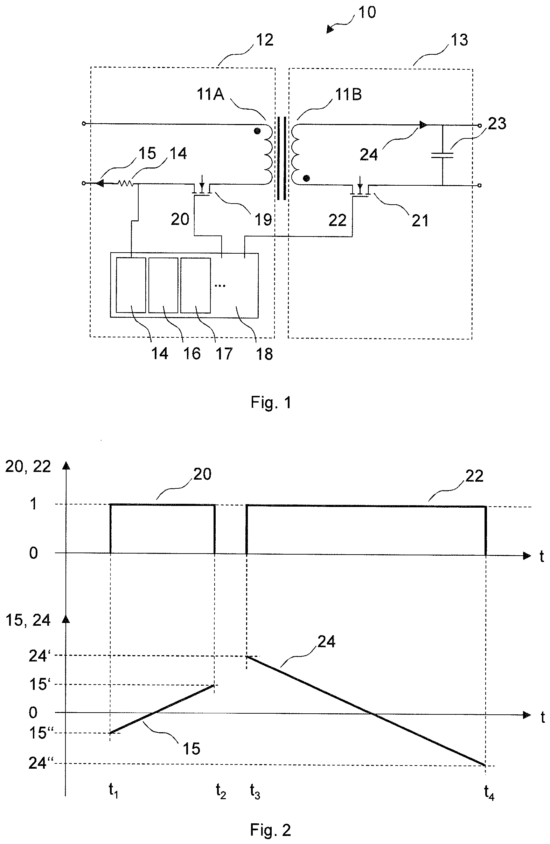

Fig. 1 zeigt schematisch einen Synchronkonverter 10 nach einem Ausführungsbeispiel, während Fig. 2 schematisch einen zeitlichen Verlauf ausgewählter elektrischer Größen 20, 22, 15, 24 des Synchronkonverters 10 nach dem Ausführungsbeispiel darstellt.

Der Synchronkonverter 10 ist als ein synchroner Sperrwandler ausgebildet, welcher einen Übertrager 11A, 11B mit vorgegebenem Windungsverhältnis umfasst, welcher eine Versorgungsseite 12 und eine Lastseite 13 des Synchronkonverters 10 koppelt. Diesen beiden Seiten 12, 13 des Synchronkonverters 10 sind jeweilige Grenzstromstärken 15', 15", 24', 24" zugewiesen, welche beispielsweise aus Herstellerspezifikationen der auf den beiden Seiten 12, 13 angeordneten Schaltungselemente resultieren.

Auf der Versorgungsseite 12 umfasst der Synchronkonverter 10 ferner Erfassungsmittel 14, Umsetzungsmittel 16 und Vergleichsmittel 17, welche als Funktionseinheiten einer integrierten Schaltung 18 ausgebildet sind, sowie ein erstes Schaltmittel 19, insbesondere einen Transistor, mit einem pulsweitenmodulierten Ansteuersignal 20, welches gemäß Fig. 2 in einer Zeitspanne t₁ - t₂ eines periodischen Betriebszyklus des Synchronkonverters 10 aktiviert ist, um das betreffende Schaltmittel 19 zu schließen und in dieser Zeitspanne einen Fluss einer Stromstärke 15 auf einer Seite 12 aus der Versorgungsseite 12 und der Lastseite 13 zu ermöglichen. Die Stromstärke 15 steigt dabei von einem Minimalwert 15" auf einen Maximalwert 15' praktisch linear an.

Auf der Lastseite 13 umfasst der Synchronkonverter 10 ferner eine Filterkapazität 23 und ein zweites Schaltmittel 21, insbesondere einen Transistor, mit einem Ansteuersignal 22. Das zweite Schaltmittel 21 wird gemäß Fig. 2 in einer Zeitspanne t₃ - t₄ des periodischen Betriebszyklus des Synchronkonverters 10 mit dem pulsweitenmodulierten Ansteuersignal 22 aktiviert, um das betreffende Schaltmittel 21 in dieser Zeitspanne zu schließen und einen Fluss einer Stromstärke 24 auf einer anderen Seite 13 aus der Versorgungsseite 12 und der Lastseite 13 zu ermöglichen. Die Stromstärke 24 sinkt dabei von einem Maximalwert 24' auf einen Minimalwert 24" praktisch linear ab.

Die Maximalwerte 15', 24' und die Minimalwerte 15", 24" sind jeweils über das vorgegebene Windungsverhältnis des Übertragers 11A, 11B fest verknüpft, sodass sich beispielsweise aus einer Kenntnis des Maximalwerts 15' auf den Maximalwert 24' schließen lässt.

Die Grenzstromstärken 15', 24', 15", 24" sollen für Zwecke einer vereinfachten Darstellung mit den Maximalwerten 15', 24' und den Minimalwerte 15", 24" identisch sein. Im Wirkbetrieb sind Maximalwerte und Minimalwerte wählbar, welche einen betragsmäßigen Sicherheitsabstand zu den Grenzstromstärken 15', 24', 15", 24" aufweisen.

Die Umsetzungsmittel 16 umfassen eine erste Funktionseinheit einer integrierten Schaltung 18 und sind dazu eingerichtet, mit Hilfe der zuvor genannten festen Verknüpfung die bereitgestellten Grenzstromstärken 24', 24" der anderen Seite 13 über das vorgegebene Windungsverhältnis umgesetzt als entsprechende Grenzstromstärken 15*, 15** auf der einen Seite 12 bereitzustellen.

Die Erfassungsmittel 14 umfassen einen Messwiderstand 14 und eine zweite Funktionseinheit 14 einer integrierten Schaltung 18, und sind dazu eingerichtet, die Stromstärke 15 auf der einen Seite 12 zu erfassen.

Die Vergleichsmittel 17 umfassen eine dritte Funktionseinheit 17 einer integrierten Schaltung 18 und sind dazu eingerichtet, die mit den Erfassungsmitteln 14 erfasste Stromstärke 15 mit den - unveränderten - Grenzstromstärken 15', 15" der eine Seite 12 und mit den - mittels der Umsetzungsmittel 16 von der anderen Seite 13 auf die eine Seite 12 umgesetzten - entsprechenden Grenzstromstärken 15*, 15** auf der einen Seite 12 zu vergleichen.

Die integrierte Schaltung kann als ein Mikrocontroller 18 oder eine anwendungsspezifische integrierte Schaltung 18 ausgebildet sein.

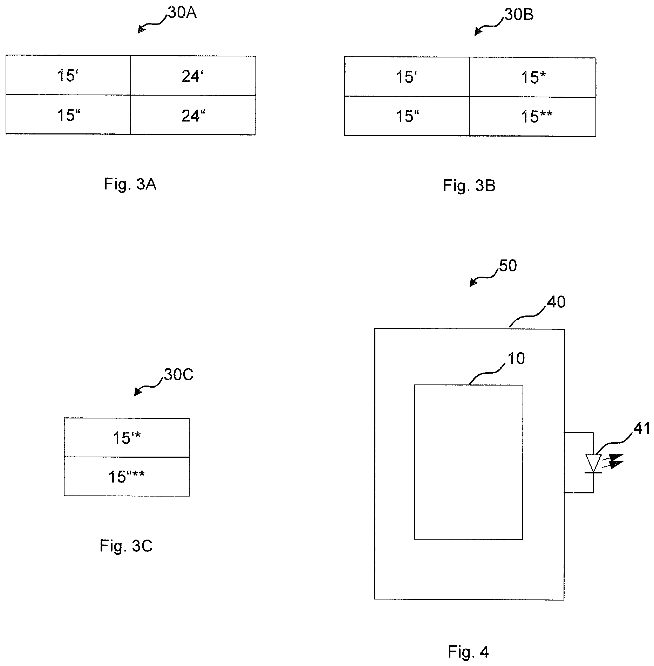

Fig. 3A-3C zeigen schematisch verschiedene Abruftabellen 30A-30C zur weiteren Ausbildung der Umsetzungsmittel 16 des Synchronkonverters 10 nach dem Ausführungsbeispiel.

Mit anderen Worten können die Umsetzungsmittel 16 eine aus den Abruftabellen 30A-30C umfassen.

Abruftabelle 30A umfasst nach Fig. 3A in einer linken Spalte die - unveränderten - Grenzstromstärken 15', 15" der einen Seite 12, und in einer rechten Spalte die Grenzstromstärken 24', 24" der anderen Seite 13 des Synchronkonverters 10. Die Umsetzungsmittel 16 sind in diesem ersten Fall dazu eingerichtet, die Grenzstromstärken der anderen Seite 24', 24" aus der Abruftabelle 30A abzurufen und über das vorgegebene Windungsverhältnis umgesetzt als die entsprechenden Grenzstromstärken 15*, 15** auf der einen Seite 12 bereitzustellen. Mit anderen Worten werden Grenzstromstärken der beiden Seiten 12, 13 separat und unverändert in der Abruftabelle 30A abgelegt, um für einen Stromschutz auf den beiden Seiten 12, 13 des Synchronkonverters 10 abrufbar zu sein. Während des Wirkbetriebs ist in jedem Betriebszyklus eine Umsetzung der Grenzstromstärken 24', 24" der anderen Seite 13 über das vorgegebene Windungsverhältnis erforderlich. Der Stromschutz für beide Seiten 12, 13 des Synchronkonverters 10 erfordert vier Vergleiche je Betriebszyklus - je zwei für Überstromschutz und für Unterstromschutz - für einen Schutz beider Seiten 12, 13 des Synchronkonverters 10 in jedem seiner Betriebszyklen.

Abruftabelle 30B umfasst nach Fig. 3B in einer linken Spalte die - unveränderten - Grenzstromstärken 15', 15" der einen Seite 12, und in einer rechten Spalte die über das vorgegebene Windungsverhältnis umgesetzten, entsprechenden Grenzstromstärken 15*, 15** auf der einen Seite 12 des Synchronkonverters 10. In diesem zweiten Fall sind die Umsetzungsmittel 16 dazu eingerichtet, die entsprechenden Grenzstromstärken 15*, 15** auf der einen Seite 12 aus der Abruftabelle 30B abzurufen und diese bereitzustellen. Mit anderen Worten werden Grenzstromstärken der beiden Seiten 12, 13 separat und ggf. bereits umgesetzt in der Abruftabelle 30B abgelegt, um für den Stromschutz auf den beiden Seiten 12, 13 des Synchronkonverters 10 abrufbar zu sein. Während des Wirkbetriebs ist keine laufende Umsetzung der Grenzstromstärken 24', 24" der anderen Seite 13 über das vorgegebene Windungsverhältnis erforderlich. Der Stromschutz für beide Seiten 12, 13 des Synchronkonverters 10 erfordert auch in diesem zweiten Fall vier Vergleiche je Betriebszyklus - je zwei für Überstromschutz und für Unterstromschutz - für einen Schutz beider Seiten 12, 13 des Synchronkonverters 10 in jedem seiner Betriebszyklen.

Abruftabelle 30C umfasst nach Fig. 3C eine betragsmäßig kleinere 15'* aus einer - unveränderten - positiven Grenzstromstärke 15' der einen Seite 12 und einer über das vorgegebene Windungsverhältnis umgesetzten, entsprechenden positiven Grenzstromstärke 15* auf der einen Seite 12 des Synchronkonverters 10. Ferner umfasst die Abruftabelle 30C eine betragsmäßig kleinere 15"** aus einer - unveränderten - negativen Grenzstromstärke 15" der einen Seite 12 und einer über das vorgegebene Windungsverhältnis umgesetzten, entsprechenden negativen Grenzstromstärke 15** auf der einen Seite 12 des Synchronkonverters 10. Die Umsetzungsmittel 16 sind in diesem dritten Fall dazu eingerichtet, die betragsmäßig kleineren Grenzstromstärken 15'*, 15"** aus der Abruftabelle 30C abzurufen und diese sowohl als Grenzstromstärken 15', 15" der einen Seite wie auch als entsprechende Grenzstromstärken 15*, 15** auf der einen Seite 12 bereitzustellen. Mit anderen Worten werden Grenzstromstärken der beiden Seiten 12, 13 konsolidiert in der Abruftabelle 30C abgelegt, um für den Stromschutz auf beiden Seiten 12, 13 des Synchronkonverters 10 abrufbar zu sein. Während des Wirkbetriebs ist keine laufende Umsetzung der Grenzstromstärken 24', 24" der anderen Seite 13 über das vorgegebene Windungsverhältnis erforderlich, und der Stromschutz für beide Seiten 12, 13 des Synchronkonverters 10 erfordert lediglich zwei Vergleiche je Betriebszyklus - je einen für Überstromschutz und für Unterstromschutz. - für einen Schutz beider Seiten 12, 13 des Synchronkonverters 10 in jedem seiner Betriebszyklen.

Die beiden Seiten 12, 13 des Synchronkonverters 10 sind losgelöst voneinander in jedem N-ten Betriebszyklus mit ganzzahligen N ≥ 1 schützbar. Beispielsweise kann der Synchronkonverter 10 dazu eingerichtet sein, einen alternierenden Stromschutz der beiden Seiten 12, 13 in aufeinanderfolgenden Betriebszyklen des Synchronkonverters 10 zu bewirken. Je nach Ausbildung der Abruftabelle 30A-30C kann dadurch die Zahl der erforderlichen Vergleiche je Betriebszyklus weiter reduziert werden.

Fig. 4 zeigt schematisch ein Betriebsgerät 40 mit dem Synchronkonverter 10 nach dem Ausführungsbeispiel und eine Beleuchtungseinrichtung 50 mit dem Betriebsgerät 40.

Das Betriebsgerät 40 zum Betreiben zumindest einer LED 41 umfasst einen Synchronkonverter 10 und ggf. weitere Funktionselemente wie beispielsweise Gleichrichter, eine Hilfswicklung für eine Niedervolt-Stromversorgung usw.

Die Beleuchtungseinrichtung 50 umfasst ein solches Betriebsgerät 40 und zumindest eine LED 41, und eignet sich insbesondere für "point-of-load"-Energieversorgungsar-chitekturen.

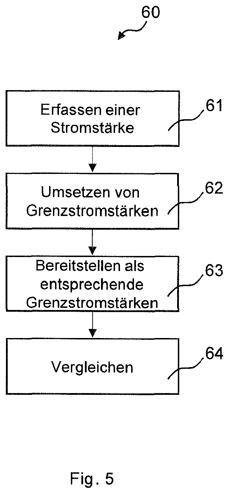

Fig. 5 zeigt schematisch ein Verfahren 60 zum Stromschutz des Synchronkonverters 10 nach dem Ausführungsbeispiel.

Das Verfahren 60 kann zum Überstromschutz oder zum Unterstromschutz von Synchronkonvertern 10 gemäß Ausführungsbeispielen durchgeführt werden, welche einen Übertrager 11A, 11B mit vorgegebenem Windungsverhältnis aufweisen. Dieser koppelt eine Versorgungsseite 12 und eine Lastseite 13 des Synchronkonverters 10, welchen jeweilige Grenzstromstärken 15', 15", 24', 24" zugewiesen sind.

Das Verfahren umfasst: ein Erfassen 61 einer Stromstärke 15 auf einer Seite 12 aus der Versorgungsseite 12 und der Lastseite 13; ein Umsetzen 62 der Grenzstromstärken 24', 24" der anderen Seite 13 aus der Versorgungsseite 12 und der Lastseite 13 über das vorgegebene Windungsverhältnis; ein Bereitstellen 63 der umgesetzten Grenzstromstärken der anderen Seite 13 als entsprechende Grenzstromstärken 15*, 15** auf der einen Seite 12, und ein Vergleichen 64 der erfassten Stromstärke 15 mit den Grenzstromstärken 15', 15" der einen Seite 12 und mit den entsprechenden Grenzstromstärken 15*, 15** auf der einen Seite 12.

Einer oder mehrere der Verfahrensschritte 61 - 64 sind ggf. zu einem Schritt integrierbar oder nebenläufig durchführbar. Beispielsweise sind die Schritte des Erfassens 61 und des - laufenden - Umsetzens 62 (aus einer Abruftabelle 30A) parallel ausführbar, sofern nicht bereits ein einmaliges Umsetzen 62 (in die Abruftabellen 30B oder 30C) zum oder vor Beginn des Wirkbetriebs erfolgt. Ferner kann beispielsweise das - laufende - Umsetzen 62 und das - laufende - Bereitstellen 63 (d.h. Abrufen) der entsprechenden Grenzstromstärken 15*, 15** zu einem Schritt zusammengefasst werden.

## Patentansprüche

1. Synchronkonverter (10), als ein synchroner Sperrwandler ausgebildet, umfassend einen Übertrager (11A, 11B) mit vorgegebenem Windungsverhältnis, welcher eine Versorgungsseite (12) und eine Lastseite (13) des Synchronkonverters (10) koppelt, welchen jeweilige Grenzstromstärken (15', 15", 24', 24") zugewiesen sind,
ein erstes Schaltmittel (19) mit einem ersten pulsweitenmodulierten Ansteuersignal (20) gesteuert, wobei das erste Ansteuersignal (20) dazu eingerichtet ist, in einer ersten Zeitspanne (t1 - t2) eines periodischen Betriebszyklus des Synchronkonverters (10) aktiv zu sein, um das erste Schaltmittel (19) zu schließen und in dieser Zeitspanne einen Fluss einer Stromstärke (15) auf einer Seite (12) aus der Versorgungsseite (12) und der Lastseite (13) zu ermöglichen,
auf der Lastseite (13) eine Filterkapazität (23) und ein zweites Schaltmittel (21) mit einem zweiten pulsweitenmodulierten Ansteuersignal (22) gesteuert, wobei das zweite Ansteuersignal (22) dazu eingerichtet ist, in einer zweiten Zeitspanne (t3- t4) des periodischen Betriebszyklus des Synchronkonverters (10) aktiv zu sein, um das zweite Schaltmittel (21) in dieser Zeitspanne zu schließen und einen Fluss einer Stromstärke (24) auf einer anderen Seite (13) aus der Versorgungsseite (12) und der Lastseite (13) zu ermöglichen, Erfassungsmittel (14), welche dazu eingerichtet sind, eine Stromstärke (15, 24) auf einer Seite (12) aus der Versorgungsseite (12) und der Lastseite (13) zu erfassen,
Umsetzungsmitteln (16), welche dazu eingerichtet sind, die Grenzstromstärken (24', 24") der anderen Seite (13) aus der Versorgungsseite (12) und der Lastseite (13) über das vorgegebene Windungsverhältnis umgesetzt als entsprechende Grenzstromstärken (15*, 15**) auf der einen Seite (12) bereitzustellen, und
Vergleichsmittel (17), welche dazu eingerichtet sind, die erfasste Stromstärke (15) mit den Grenzstromstärken (15', 15") der eine Seite (12) und mit den entsprechenden Grenzstromstärken (15*, 15**) auf der einen Seite (12) zu vergleichen.

2. Synchronkonverter (10) gemäß Anspruch 1, wobei
die Umsetzungsmittel (16) eine Abruftabelle (30A) umfassen mit den jeweiligen Grenzstromstärken (15', 15", 24', 24") der einen und der anderen Seite (12, 13) des Synchronkonverters (10), und
wobei die Umsetzungsmittel (16) dazu eingerichtet sind, die Grenzstromstärken der anderen Seite (24', 24") aus der Abruftabelle (30A) abzurufen und über das vorgegebene Windungsverhältnis umgesetzt als die entsprechenden Grenzstromstärken (15*, 15**) auf der einen Seite (12) bereitzustellen.

3. Synchronkonverter (10) gemäß Anspruch 1, wobei
die Umsetzungsmittel (16) eine Abruftabelle (30B) umfassen mit den Grenzstromstärken (15', 15") der einen Seite (12) und den über das vorgegebene Windungsverhältnis umgesetzten, entsprechenden Grenzstromstärken (15*, 15**) auf der einen Seite (12) des Synchronkonverters (10), und
wobei die Umsetzungsmittel (16) dazu eingerichtet sind, die entsprechenden Grenzstromstärken (15*, 15**) auf der einen Seite (12) aus der Abruftabelle (30B) abzurufen und diese bereitzustellen.

4. Synchronkonverter (10) gemäß Anspruch 1, wobei
die Umsetzungsmittel (16) eine Abruftabelle (30C) umfassen mit einer betragsmäßig kleineren (15'*) aus einer positiven Grenzstromstärke (15') der einen Seite (12) und einer über das vorgegebene Windungsverhältnis umgesetzten, entsprechenden positiven Grenzstromstärke (15*) auf der einen Seite (12) des Synchronkonverters (10), und mit einer betragsmäßig kleineren (15"**) aus einer negativen Grenzstromstärke (15") der einen Seite (12) und einer über das vorgegebene Windungsverhältnis umgesetzten, entsprechenden negativen Grenzstromstärke (15**) auf der einen Seite (12) des Synchronkonverters (10), und
wobei die Umsetzungsmittel (16) dazu eingerichtet sind, die betragsmäßig kleineren Grenzstromstärken (15'*, 15"**) aus der Abruftabelle (30C) abzurufen und diese als entsprechende Grenzstromstärken (15*, 15**) auf der einen Seite (12) bereitzustellen.

5. Synchronkonverter (10) gemäß einem der vorhergehenden Ansprüche, wobei
die Umsetzungsmittel (16) eine Funktionseinheit eines Mikrocontrollers (18) oder einer anwendungsspezifischen integrierten Schaltung (18) umfassen.

6. Synchronkonverter (10) gemäß einem der vorhergehenden Ansprüche, wobei
die Vergleichsmittel (17) eine Funktionseinheit eines Mikrocontrollers (18) oder einer anwendungsspezifischen integrierten Schaltung (18) umfassen.

7. Synchronkonverter (10) gemäß einem der vorhergehenden Ansprüche, wobei
die Erfassungsmittel (14) auf der einen Seite (12) des Synchronkonverters (10) angeordnet sind.

8. Synchronkonverter (10) gemäß einem der vorhergehenden Ansprüche, wobei
die Erfassungsmittel (14) einen Messwiderstand umfassen.

9. Synchronkonverter (10) gemäß einem der vorhergehenden Ansprüche, wobei der Synchronkonverter (10) als ein synchroner Sperrwandler ausgebildet ist, welcher den Übertrager (11A, 11B) umfasst.

10. Betriebsgerät (40) zum Betreiben zumindest einer LED (41), umfassend einen Synchronkonverter (10) gemäß einem der Ansprüche 1 - 9.

11. Beleuchtungseinrichtung (50), umfassend
ein Betriebsgerät (40) gemäß Anspruch 10; und
zumindest eine LED (41).

12. Verfahren (60) zum Stromschutz eines Synchronkonverters (10) gemäß Anspruch 1 mit einem Übertrager (11A, 11B) mit vorgegebenem Windungsverhältnis, welcher eine Versorgungsseite (12) und eine Lastseite (13) des Synchronkonverters (10) koppelt, welchen jeweilige Grenzstromstärken (15', 15", 24', 24") zugewiesen sind, umfassend:
Erfassen (61) einer Stromstärke (15) auf einer Seite (12) aus der Versorgungsseite (12) und der Lastseite (13),
Umsetzen (62) der Grenzstromstärken (24', 24") der anderen Seite (13) aus der Versorgungsseite (12) und der Lastseite (13) über das vorgegebene Windungsverhältnis,
Bereitstellen (63) der umgesetzten Grenzstromstärken der anderen Seite (13) als entsprechende Grenzstromstärken (15*, 15**) auf der einen Seite (12), und
Vergleichen (64) der erfassten Stromstärke (15) mit den Grenzstromstärken (15', 15") der einen Seite (12) und mit den entsprechenden Grenzstromstärken (15*, 15**) auf der einen Seite (12).

13. Verfahren (60) gemäß Anspruch 12, wobei
das Verfahren (60) mit einem Synchronkonverter (10) gemäß einem der Ansprüche 1 - 9 durchgeführt wird.

14. Verfahren (60) gemäß Anspruch 12 oder Anspruch 13, wobei
das Verfahren (60) zum Überstromschutz oder zum Unterstromschutz des Synchronkonverters (10) durchgeführt wird.

## Claims

1. Synchronous converter (10) designed as a synchronous flyback converter, comprising
a transformer (11A, 11B) having a predetermined winding ratio, which couples together a supply side (12) and a load side (13) of the synchronous converter (10), which are each assigned limiting currents (15', 15", 24', 24");
a first switching device (19) controlled with a first, pulse-width-modulated control signal (20), wherein the first control signal (20) is configured to be active in a first time span (t1 - t2) of a periodic operating cycle of the synchronous converter (10) in order to close the first switching device (19) and, in this time span, to enable a flow of a current (15) on one side (12) from the supply side (12) and the load side (13);
on the load side (13), a filter capacitor (23) and a second switching device (21) controlled with a second, pulse-width-modulated control signal (22), wherein the second control signal (22) is configured to be active in a second time span (t3 - t4) of the periodic operating cycle of the synchronous converter (10) in order to close the second switching device (21) in this time span and to enable a flow of a current (24) on another side (13) from the supply side (12) and the load side (13); detection means (14) which are configured to detect a current (15, 24) on one side (12) from the supply side (12) and the load side (13);
conversion means (16), which are configured to provide the limiting currents (24', 24") of the other side (13) from the supply side (12) and from the load side (13), converted via the predetermined winding ratio, as corresponding limiting currents (15*, 15**) on the one side (12); and
comparison means (17), which are configured to compare the detected current (15) to the limiting currents (15', 15") of the one side (12) and to the corresponding limiting currents (15*, 15**) on the one side (12).

2. Synchronous converter (10) according to claim 1, wherein
the conversion means (16) comprise a retrieval table (30A) containing the respective limiting currents (15', 15", 24', 24") of the one and of the other side (12, 13) of the synchronous converter (10), and
wherein the conversion means (16) are configured to retrieve the limiting currents of the other side (24', 24") from the retrieval table (30A) and provide them, converted via the predetermined winding ratio, as the corresponding limiting currents (15*, 15**) on the one side (12).

3. Synchronous converter (10) according to claim 1, wherein
the conversion means (16) comprise a retrieval table (30B) containing the limiting currents (15', 15") of the one side (12) and the corresponding limiting currents (15*, 15**), converted via the predetermined winding ratio, on the one side (12) of the synchronous converter (10), and
wherein the conversion means (16) are configured to retrieve the corresponding limiting currents (15*, 15**) on the one side (12) from the retrieval table (30B) and to provide them.

4. Synchronous converter (10) according to claim 1, wherein
the conversion means (16) comprise a retrieval table (30C) containing a smaller - in terms of quantity - positive limiting current (15'*) from a positive limiting current (15') of the one side (12) and a corresponding positive limiting current (15*), converted via the predetermined winding ratio, on the one side (12) of the synchronous converter (10), and containing a smaller - in terms of quantity - negative limiting current (15"**) from a negative limiting current (15") of the one side (12) and a corresponding negative limiting current (15**), converted via the predetermined winding ratio, on the one side (12) of the synchronous converter (10), and
wherein the conversion means (16) are configured to retrieve the smaller - in terms of quantity - limiting currents (15'*, 15"**) from the retrieval table (30C) and provide them as corresponding limiting currents (15*, 15**) on the one side (12).

5. Synchronous converter (10) according to one of the preceding claims, wherein
the conversion means (16) comprise a functional unit of a microcontroller (18) or of an application-specific integrated circuit (18).

6. Synchronous converter (10) according to one of the preceding claims, wherein
the comparison means (17) comprise a functional unit of a microcontroller (18) or of an application-specific integrated circuit (18).

7. Synchronous converter (10) according to one of the preceding claims, wherein
the detection means (14) are arranged on the one side (12) of the synchronous converter (10).

8. Synchronous converter (10) according to one of the preceding claims, wherein
the detection means (14) comprise a measuring resistor.

9. Synchronous converter (10) according to one of the preceding claims, wherein
the synchronous converter (10) is designed as a synchronous flyback converter, which comprises the transformer (11A, 11B).

10. Operating device (40) for operating at least one LED (41), comprising
a synchronous converter (10) according to one of claims 1 - 9.

11. Lighting system (50), comprising
an operating device (40) according to claim 10; and
at least one LED (41).

12. Method (60) for the current protection of a synchronous converter (10) according to claim 1 having a transformer (11A, 11B) with a predetermined winding ratio, which couples together a supply side (12) and a load side (13) of the synchronous converter (10), which are each assigned limiting currents (15', 15", 24', 24"), comprising:
detecting (61) a current (15) on one side (12) from the supply side (12) and from the load side (13),
converting (62) the limiting currents (24', 24") of the other side (13) from the supply side (12) and from the load side (13) via the predetermined winding ratio,
providing (63) the converted limiting currents of the other side (13) as corresponding limiting currents (15*, 15**) on the one side (12), and
comparing (64) the detected current (15) to the limiting currents (15', 15") of the one side (12) and to the corresponding limiting currents (15*, 15**) on the one side (12).

13. Method (60) according to claim 12, wherein
the method (60) is carried out with a synchronous converter (10) according to one of claims 1 - 9.

14. Method (60) according to claim 12 or claim 13, wherein
the method (60) is carried out for the overcurrent protection or undercurrent protection of the synchronous converter (10).

## Revendications

1. Convertisseur synchrone (10), réalisé comme un convertisseur à oscillateur bloqué synchrone, comprenant
un transformateur (11A, 11B) présentant un rapport de spires prédéfini, lequel couple un côté alimentation (12) et un côté charge (13) du convertisseur synchrone (10), auxquels des intensités de courant limites (15', 15", 24', 24") respectives sont assignées,
un premier moyen de commutation (19) commandé par un premier signal de commande (20) modulé en largeur d'impulsion, le premier signal de commande (20) étant conçu pour être actif durant une première période de temps (t1-t2) d'un cycle de fonctionnement périodique du convertisseur synchrone (10), pour fermer le premier moyen de commutation (19) et pour permettre durant cette période de temps un flux d'une intensité de courant (15) sur un côté (12) depuis le côté alimentation (12) et le côté charge (13),
sur le côté charge (13), une capacité de filtrage (23) et un deuxième moyen de commutation (21) commandé par un deuxième signal de commande (22) modulé en largeur d'impulsion, le deuxième signal de commande (22) étant conçu pour être actif durant une deuxième période de temps (t3-t4) du cycle de fonctionnement périodique du convertisseur synchrone (10), pour fermer durant cette période de temps le deuxième moyen de commutation (21) et pour permettre un flux d'une intensité de courant (24) sur un autre côté (13) depuis le côté alimentation (12) et le côté charge (13), des moyens de détection (14), lesquels sont conçus pour détecter une intensité de courant (15, 24) sur un côté (12) depuis le côté alimentation (12) et le côté charge (13),
des moyens de conversion (16), lesquels sont conçus pour fournir les intensités de courant limites (24', 24") de l'autre côté (13) depuis le côté alimentation (12) et le côté charge (13), converties par l'intermédiaire du rapport de spires comme intensités de courant limites (15*, 15**) correspondantes sur ledit un côté (12) et
des moyens de comparaison (17), lesquels sont conçus pour comparer l'intensité de courant (15) détectée aux intensités de courant limites (15', 15") dudit un côté (12) et aux intensités de courant limites (15*, 15**) correspondantes sur ledit un côté (12).

2. Convertisseur synchrone (10) selon la revendication 1, dans lequel
les moyens de conversion (16) comprennent une table d'extraction (30A) comprenant les intensités de courant limites (15', 15", 24', 24") correspondantes de l'un et de l'autre côté (12, 13) du convertisseur synchrone (10) et
les moyens de conversion (16) sont conçus pour extraire les intensités de courant limites de l'autre côté (24', 24") de la table d'extraction (30A) et pour les fournir sur ledit un côté (12), converties par l'intermédiaire du rapport de spires prédéfini, comme les intensités de courant limites (15*, 15**) correspondantes.

3. Convertisseur synchrone (10) selon la revendication 1, dans lequel
les moyens de conversion (16) comprennent une table d'extraction (30B) comprenant les intensités de courant limites (15', 15") dudit un côté (12) et les intensités de courant limites (15*, 15**) correspondantes sur ledit un côté (12) du convertisseur synchrone (10), converties par l'intermédiaire du rapport de spires prédéfini et
les moyens de conversion (16) sont conçus pour extraire de la table d'extraction (30B) les intensités de courant limites (15*, 15**) correspondantes sur ledit un côté (12) et pour fournir celles-ci.

4. Convertisseur synchrone (10) selon la revendication 1, dans lequel
les moyens de conversion (16) comprennent une table d'extraction (30C) comprenant une intensité de courant limite (15'*) de valeur inférieure constituée par une intensité de courant limite (15') positive dudit un côté (12) et une intensité de courant limite (15*) positive correspondante, convertie par l'intermédiaire du rapport de spires prédéfini sur ledit un côté (12) du convertisseur synchrone (10) et comprenant une intensité de courant limite (15"**) de valeur inférieure constituée par une intensité de courant limite (15') négative dudit un côté (12) et une intensité de courant limite (15**) négative correspondante, convertie par l'intermédiaire du rapport de spires prédéfini sur ledit un côté (12) du convertisseur synchrone (10) et
les moyens de conversion (16) sont conçus pour extraire les intensités de courant limites (15'*, 15"**) de valeur plus petite de la table d'extraction (30C) et pour les fournir sur ledit un côté (12) comme les intensités de courant limites (15*, 15**) correspondantes.

5. Convertisseur synchrone (10) selon l'une quelconque des revendications précédentes, dans lequel
les moyens de conversion (16) comprennent une unité fonctionnelle d'un microcontrôleur (18) ou d'un circuit intégré (18) spécifique à l'utilisation.

6. Convertisseur synchrone (10) selon l'une quelconque des revendications précédentes, dans lequel
les moyens de comparaison (17) comprennent une unité fonctionnelle d'un microcontrôleur (18) ou d'un circuit intégré (18) spécifique à l'utilisation.

7. Convertisseur synchrone (10) selon l'une quelconque des revendications précédentes, dans lequel
les moyens de détection (14) sont disposés sur ledit un côté (12) du convertisseur synchrone (10).

8. Convertisseur synchrone (10) selon l'une quelconque des revendications précédentes, dans lequel
les moyens de détection (14) comprennent une résistance de mesure.

9. Convertisseur synchrone (10) selon l'une quelconque des revendications précédentes, dans lequel
le convertisseur synchrone (10) est réalisé comme un convertisseur à oscillateur bloqué synchrone, lequel comprend le transformateur (11A, 11B).

10. Appareil de fonctionnement (40) pour le fonctionnement d'au moins une DEL (41), comprenant
un convertisseur synchrone (10) selon l'une quelconque des revendications 1 à 9.

11. Dispositif d'éclairage (50), comprenant
un appareil de fonctionnement (40) selon la revendication 10 ; et
au moins une DEL (41).

12. Procédé (60) pour la protection en courant d'un convertisseur synchrone (10) selon la revendication 1, comprenant un transformateur (11A, 11B) présentant un rapport de spires prédéfini, lequel couple un côté alimentation (12) et un côté charge (13) du convertisseur synchrone (10), auxquels des intensités de courant limites (15', 15", 24', 24") respectives sont assignées, comprenant :
la détection (61) d'une intensité de courant (15) sur un côté (12) depuis le côté alimentation (12) et le côté charge (13),
la conversion (62) des intensités de courant limites (24', 24") de l'autre côté (13) depuis le côté alimentation (12) et le côté charge (13) par l'intermédiaire du rapport de spires prédéfini,
la fourniture (63) des intensités de courant limites converties de l'autre côté (13) comme intensités de courant limites (15*, 15**) correspondantes sur ledit un côté (12) et
la comparaison (64) de l'intensité de courant (15) détectée aux intensités de courant limites (15', 15") dudit un côté (12) et aux intensités de courant limites (15*, 15**) correspondantes sur ledit un côté (12).

13. Procédé (60) selon la revendication 12, dans lequel
le procédé (60) est exécuté à l'aide d'un convertisseur synchrone (10) selon l'une quelconque des revendications 1 à 9.

14. Procédé (60) selon la revendication 12 ou 13, dans lequel
le procédé (60) est exécuté pour la protection du convertisseur synchrone (10) contre les surintensités et contre les courants faibles.
